# EUROPÄISCHE PATENTSCHRIFT

(11) **EP 4 008 419 B1**
(45) Veröffentlichungstag und Bekanntmachung des Hinweises auf die Patenterteilung: **10.07.2024**
(21) Anmeldenummer: 21210368.3
(22) Anmeldetag: 25.11.2021
(51) Int. Cl.: B01D 21/24, C02F 3/12

(54) **ABWASSERBEHANDLUNGSANLAGE**
WASTE WATER TREATMENT PLANT
INSTALLATION DE TRAITEMENT DES EAUX USÉES

(30) Priorität: 04.12.2020 DE 102020132301
(43) Veröffentlichungstag der Anmeldung: 08.06.2022
(73) Patentinhaber: Kordes KLD Wasser- und Abwassersysteme GmbH, 32602 Vlotho (DE)
(72) Erfinder: Kordes, Sebastian, 32602 Vlotho (DE)
(74) Vertreter: Kohlmann, Kai

(56) Entgegenhaltungen:
- DE-B3- 102019 100 455
- DE-U1- 202012 004 597

## Beschreibung

Die Erfindung betrifft eine sequentiell arbeitende Abwasserbehandlungsanlage zur biologischen Reinigung von Abwasser umfassend einen Reaktorbehälter zur Aufnahme von Abwasser mit einem Einlass für das unbehandelte Abwasser und einem Auslass für das behandelte Abwasser sowie einer Belüftungsvorrichtung zum Lufteintrag in das Abwasser, die am Grund des Reaktorbehälters angeordnet ist.

Derartige sequentiell arbeitende Abwasserbehandlungsanlagen, auch als SBR-Anlagen (SBR - Sequencing-Batch-Reactor) bezeichnet, arbeiten im Belebtschlammverfahren im Aufstaubetrieb. In den Reaktorbehälter wird mit der Belüftungsvorrichtung Luft feinblasig eingetragen. Mit der Belüftung wird die Sauerstoffversorgung der Bakterien für die biologische Reinigung sichergestellt.

In SBR-Anlagen werden zumindest die biologische Reinigung und die Nachklärung sequentiell in dem Reaktorbehälter durchgeführt. Die Vorklärung erfolgt üblicherweise in einer separaten Vorklärkammer. Darüber hinaus sind sogenannte Einbehälteranlagen bekannt geworden, in der alle Abwasserbehandlungsschritte in einem Reaktorbehälter stattfinden.

Die Abwasserbehandlung nach dem Belebtschlammverfahren im Aufstaubetrieb in SBR-Anlagen unterteilt sich in folgende Phasen, die zusammen einen Zyklus bilden:

### 1. Füllphase

Das zu behandelnde Abwasser gelangt entweder zunächst in die Vorklärkammer, in der feste Bestandteile zurückgehalten werden, oder wird diskontinuierlich unmittelbar in den Reaktorbehälter der Einbehälteranlage geleitet.

### 2. Reaktionsphase

In dem Reaktorbehälter findet die biologische Reinigung des Abwassers statt. Mit der Belüftungsvorrichtung wird Luft in den Reaktorbehälter eingetragen. Der sogenannte Belebtschlamm mit Mikroorganismen entsteht und das Abwasser wird durch den Lufteintrag umgewälzt und biologisch gereinigt.

### 3. Absetzphase

In einer anschließenden Phase ohne Lufteintrag, der Absetzphase, sinkt der Belebtschlamm zum Boden des Reaktorbehälters ab. Dadurch bildet sich im oberen Teil des Reaktorbehälters eine Klarwasserzone.

### 4. Dekantierphase

Das behandelte Abwasser aus der Klarwasserzone wird mit einem Klarwasserabzug abgezogen und in einen Vorfluter oder eine Versickerungsanlage eingeleitet.

Aus der DE 10 2014 103 652 ist eine Einbehälteranlage zur Abwasserbehandlung nach dem Belebtschlammverfahren im Aufstaubetrieb mit aerober Schlammstabilisierung bekannt. Die Einbehälteranlage arbeitet mit einem Zyklus je Tag. Der Zulauf von Abwasser in der Füllphase erfolgt über ein verlängertes Tauchrohr zur Zulaufberuhigung. Der Lufteintrag in der Reaktionsphase erfolgt mit mehreren sternförmig angeordneten Rohrmembranbelüftern. Für den Klarwasserabzug in der Dekantierphase kommt eine Tauchmotorpumpe zum Einsatz, die in einem Unterdruck-Behälter angeordnet ist.

Eine weitere Einbehälteranlage zur Abwasserbehandlung nach dem Belebtschlammverfahren im Aufstaubetrieb mit aerober Schlammstabilisierung von KLARO ist aus Kleinkläranlagen heute, Bernd Goldberg, 3., vollständig überarbeitete und erweiterte Auflage 2018, Beuth Verlag GmbH, Seiten 365 - 367 bekannt. Die Einbehälteranlage hat eine Tauchwand für die Befestigung einer Mammutpumpe für den Klarwasserabzug. Für den Lufteintrag in das Abwasser sind am Grund des Reaktorbehälters zwei Membranbelüfter angeordnet. Die Einbehälteranlage arbeitet mit 2 bis 5 Zyklen pro Tag. Die Mammutpumpe, auch als Druckluftheber bezeichnet, oder nach ihrem Erfinder Carl Immanuel Löscher auch Löscherpumpe genannt, ist ein senkrecht in das Abwasser eintauchendes Rohr, in das unterhalb des Abwasserspiegels Luft mittels eines Verdichters eingepresst wird. Druckluftheber dienen bevorzugt zur Hebung feststoffbeladener Flüssigkeiten. Mittels einer Ventilsteuerung mit drei Ventilen wird die Luft aus dem Verdichter wahlweise den beiden Membranbelüftern, dem Druckluftheber oder einer Schlammrückführung zugeführt. Die Ventile werden mittels einer elektronischen Steuerung angesteuert. Die Ventile und deren Steuerung sind technisch aufwändig, erfordern einen erhöhten Installationsaufwand und sind zudem störanfällig. Bei den Drucklufthebern besteht zudem die Gefahr der Verstopfung.

Aus der DE 10 2019 100 455 B3 ist schließlich eine als Einbehälteranlage ausgeführte sequentiell arbeitende Abwasserbehandlungsanlage zur biologischen Reinigung von Abwasser bekannt, die einen Klarwasserabzug unter Verzicht auf eine Pumpe bzw. einen Druckluftheber und der zu dessen Ansteuerung erforderlichen Ventile ermöglicht. Der Klarwasserabzug erfolgt durch einen Ablauf des behandelten Abwassers aus der Klarwasserzone im freien Gefälle. Der Ablauf im freien Gefälle wird zur Vereinheitlichung der Terminologie nachfolgend ebenfalls stets als Klarwasserabzug bezeichnet. Der Einlass für das unbehandelte Abwasser befindet sich oberhalb des maximalen Abwasserstandes H _{W max} in dem Reaktorbehälter und der Auslass für das behandelte Abwasser vorzugsweise unmittelbar oberhalb des minimalen Abwasserstandes H _{W min} in dem Reaktorbehälter. Um den Ablauf des behandelten Abwassers trotz des unterhalb des Einlasses angeordneten Auslasses im Regelbetrieb der Anlage auf die Dekantierphase zu beschränken, ist eine beweglich in dem Reaktorbehälter angeordnete Ablaufvorrichtung mit einem Ablaufeinlass für das behandelte Abwasser und eine fluidleitende Verbindung zwischen dem Ablaufeinlass der Ablaufvorrichtung und dem Auslass sowie eine be- und entlüftbare Hebevorrichtung für die Ablaufvorrichtung vorgesehen, die durch Belüften den Ablaufeinlass der Ablaufvorrichtung vollständig aus dem Abwasser heraushebt und durch Entlüften den Ablaufeinlass der Ablaufvorrichtung in das Abwasser eintaucht. Die belüftete Hebevorrichtung verhindert während der Reaktions- und Absetzphase den Auslauf von Abwasser und aufgewirbelten Belebtschlammflocken aus dem Reaktorbehälter. Durch Entlüften der Hebevorrichtung taucht die Ablaufvorrichtung aufgrund ihres Eigengewichts mit dem Ablaufeinlass in das Abwasser ein und das behandelte Abwasser aus der Klarwasserzone fließt im freien Gefälle durch den Auslass ab.

Die DE 102 03 076 C1 offenbart eine Kläranlage mit zwei Kammern zur Aufnahme einer Flüssigkeit sowie ein Verfahren zum steuerbaren Überleiten einer Flüssigkeit von einer ersten Kammer in eine zweite Kammer. In der ersten Kammer ist ein Flüssigkeitszulauf und in der zweiten Kammer ein Flüssigkeitsablauf angeordnet ist. Zwischen den beiden Kammern ist eine u-förmig verlaufende Rohrleitung derart angeordnet, dass sich eine erste Öffnung am ersten Ende der Rohrleitung in der ersten Kammer und eine zweite Öffnung am zweiten Ende der Rohrleitung in der zweiten Kammer befindet, wobei der Scheitel der Rohrleitung oberhalb der Öffnungen an beiden Enden der Rohleitung angeordnet ist. Das Überströmen der Flüssigkeit von der ersten in die zweite Kammer erfolgt über die Rohrleitung allein durch ein Druckgefälle zwischen den beiden Kammern. Im Bereich des Scheitels ist ein Gasanschluss zum Einleiten und Ablassen eines Druckgases vorgesehen. Durch das Einleiten entsteht in dem Kanal eine Gasblase, welche das Überströmen der Flüssigkeit aus der ersten in die zweite Kammer unterbindet. Um die Rohrleitung wieder freizugeben, wird das Druckgas aus der Rohrleitung Kanal abgelassen, so dass die Flüssigkeit wieder ungehindert durch die Rohrleitung strömen kann. In einer Ausführungsform der Kläranlage ist in der zweiten Kammer eine Ablaufkammer angeordnet, die von einem nach oben geöffneten Behälter gebildet wird, welcher innerhalb der Kammer in die Flüssigkeit eintaucht. Im oberen Bereich ist der Behälter mit dem Ablauf verbunden, so dass die in dem Behälter befindliche Flüssigkeit durch den Ablauf ablaufen kann, wenn der Flüssigkeitsspiegel in der Behälter auf das Niveau des Ablaufes steigt. Das Überströmen bzw. Überleiten der Flüssigkeit aus der zweiten Kammer in den Behälter erfolgt in gleicher Weise wie das Überleiten des Wassers aus der ersten Kammer in die zweite Kammer mit einer u-förmigen Rohrleitung, wobei mittels einer Luftblase im Scheitelbereich ein Überströmen von Flüssigkeit aus der zweiten Kammer in den Behälter unterbunden werden kann.

Aus der DE 200 22 735 U1 und der DE 201 16 397 U1 sind Mehrkammer-Kleinkläranlagen bekannt, bei denen verschiedene Kammern der Kläranlage durch u-förmige Rohrleitungen nach dem Prinzip der kommunizierenden Röhren miteinander verbunden sind. Aus einem Tauchbelüfter für die Belebungsluft aufsteigende Luftblasen gelangen in die Rohrleitung und unterbrechen deren Funktion als kommunizierende Röhre.

Schließlich offenbart die DE 20 2012 004597 U1 eine Siphon-Vorrichtung, bei der ein oberer Siphon-Bogenabschnitt an eine Druckluftleitung gekoppelt ist, wobei die Siphon-Vorrichtung über die Druckluftleitung belüftbar ist, um eine Luftblase auszubilden, welche den Überlauf des vorgeklärten Abwassers aus dem Vorklärbecken in das Reaktorbecken unterbindet und wobei die Siphon-Vorrichtung über die Druckluftleitung entlüftbar ist, um die Luftblase ablassen zu können, so dass der Überlauf ermöglicht wird. Die Siphonvorrichtung ist durch bekannte und handelsübliche Rohre und Krümmer gebildet; sie weist ein Zulaufrohr mit Ablaufeinlass auf, an das sich der obere Siphonbogenabschnitt anschließt. Ein Rohr verbindet den oberen Siphonbogenabschnitt mit einem unteren Siphonbogenabschnitt. Ein weiteres Rohr verbindet den unteren Siphonbogenabschnitt mit einem zweiten oberen Siphonbogenabschnitt. Daran schließt sich ein Auslaufrohr an.

Ausgehend von einer sequentiell arbeitenden Abwasserbehandlungsanlage mit einem Klarwasserabzug aus der Klarwasserzone im freien Gefälle, liegt der Erfindung die Aufgabe zugrunde, eine konstruktiv einfache, zuverlässige und preiswerte Lösung vorzuschlagen, um den Ablauf des behandelten Abwassers im freien Gefälle zeitweilig zu unterbinden.

Die Aufgabe wird durch eine Abwasserbehandlungsanlage mit den Merkmalen des Anspruchs 1 gelöst. Vorteilhafte Ausgestaltungen der Erfindung ergeben sich aus den Merkmalen der Unteransprüche.

Die Lösung der Aufgabe beruht auf dem Gedanken, die fluidleitende Verbindung zwischen dem Ablaufeinlass der Ablaufvorrichtung und dem oberhalb der Oberfläche des minimalen Abwasserstandes H _{W min} angeordneten Auslass als insbesondere mäanderförmige Rohrleitung bzw. doppelt u-förmige Rohrleitung auszugestalten, die ohne bewegliche Teile, wie beispielsweise Absperrschieber, absperrbar ist. Das Absperren erfolgt mittels einer Gasblase, die zeitweilig in dem in Ablaufrichtung ersten, nach oben weisenden gekrümmten Abschnitt der Rohrleitung wirksam ist. Der erste gekrümmte Abschnitt kann sich oberhalb der Oberfläche des minimalen Abwasserstands (H _{W min}) befinden. Um die Gasblase zu erzeugen, mündet mindestens eine Arbeitsleitung in dem ersten gekrümmten Abschnitt der fluidleitenden Verbindung.

Über die mindestens eine Arbeitsleitung ist das Innere des ersten gekrümmten Abschnitts zeitweilig mit Druckluft aus einer Druckluftquelle beaufschlagbar oder zeitweilig entlüftbar. Durch die Druckluftbeaufschlagung wird die Gasblase aufgebaut und ein weiteres Abziehen von Flüssigkeit unterbunden. Durch Entlüften wird die fluidleitende Verbindung durchgängig und die Flüssigkeit kann abgezogen werden.

Bei Erreichen des minimalen Abwasserstands (H _{W min}) verhindert das Wasser in den in Ablaufrichtung nachgeordneten weiteren Abschnitten der Rohrleitung, dass die Gasblase über den Auslass entweicht. Um unabhängig vom Abwasserstand stets einen ausreichenden Gegendruck durch das Wasser in den nachgeordneten weiteren Abschnitten der Rohrleitung sicherzustellen, beträgt der vertikale Abstand zwischen dem zweiten gekrümmten Abschnitt und der Oberfläche des minimalen Abwasserstands (H _{W min}) mindestens dem Abstand zwischen dem maximalen Abwasserstand (H _{W max}) und dem minimalen Abwasserstand (H _{W min}).

Der Verbindungsabschnitt der Rohrleitung, der den ersten gekrümmten Abschnitt und den zweiten gekrümmten Abschnitt der Rohrleitung miteinander verbindet, verläuft vorzugsweise, jedoch nicht zwingend, in vertikaler Richtung. Wichtig ist lediglich die Aufrechterhaltung des vertikalen Abstands zwischen dem zweiten gekrümmten Abschnitt und der Oberfläche des minimalen Abwasserstands (H _{W min}).

Auch der Einlassabschnitt der Rohrleitung und der erste Teil des Auslassabschnitts der Rohrleitung verlaufen vorzugsweise in vertikaler Richtung und sodann in horizontaler Richtung zum Auslass. Hierdurch werden die kürzest möglichen Strömungswege zwischen den beiden gekrümmten Abschnitten, dem Ablaufeinlass und dem Auslass ermöglicht.

Ein wesentlicher Vorteil der erfindungsgemäßen Lösung besteht darin, dass konstruktiv Verschmutzungen des Absperrorgans ausgeschlossen sind, so dass auch bei einem versehentlichen Ansaugen von Schlamm oder anderen Verunreinigungen keine Betriebsstörungen der Abwasserbehandlungsanlage zu erwarten sind. Hierdurch wird die Zuverlässigkeit der Abwasserbehandlungsanlage erheblich verbessert.

Der Verzicht auf bewegliche Teile vereinfacht zudem die Konstruktion und reduziert die Kosten gegenüber einer Lösung mit beweglichen Teilen erheblich. Dies gilt insbesondere bei größeren Durchmessern der fluidleitenden Verbindung von bis zu 200 mm.

Ein weiterer Kostenvorteil der erfindungsmäßen Lösung resultiert daraus, dass die ohnehin für die Belüftungsvorrichtung vorhandene Druckluftquelle zugleich für die Ausbildung der Gasblase und damit für den gesteuerten Absperrvorgang verwendet werden kann. Das zur zeitweiligen Beaufschlagung der mindestens einen Arbeitsleitung mit Druckluft erforderliche Ventil, insbesondere ein elektrisch betätigtes Magnetventil, verursacht unabhängig vom Durchmesser der fluidleitenden Verbindung im Verhältnis zu einem mechanischen Absperrschieber vergleichsweise geringe Kosten.

Die fluidleitende Verbindung zwischen dem Ablaufeinlass der Ablaufvorrichtung und dem Auslass ist eine Rohrleitung, wobei der nach oben weisende erste gekrümmte Abschnitt und der nach unten weisende, zweite gekrümmte Abschnitt der Rohrleitung vorzugsweise als Krümmer ausgebildet sind. Die als Krümmer ausgebildete Rohrabschnitte bewirken eine Richtungsänderung des ablaufenden Wassers. Zugleich dient der in Ablaufrichtung erste Krümmer mit dem Arbeitsleitungs-Anschluss als Absperrorgan für die Rohrleitung. Der Krümmer kann beispielsweise bogen- oder u-förmig ausgeführt sein. Ein u-förmiger Krümmer lässt sich beispielsweise aus zwei 90 Grad-Rohrverbindern sowie einem kurzen horizontalen Rohrstück zusammensetzen. Die gesamte Rohrleitung einschließlich der Krümmer kann ausschließlich aus graden Rohrstücken und 90 Grad-Rohrverbindern zusammengesetzt sein. Die Rohrleitung sowie die Krümmer bestehen, wie in der Abwasserentsorgung üblich, vorzugsweise aus Kunststoff. Die Ausführung aus Kunststoff trägt zu den geringen Kosten sowie der Beständigkeit gegen Korrosion und Chemikalien bei.

Die Druckluftquelle, über die das Innere des gekrümmten Abschnitts der fluidleitenden Verbindung zeitweilig mit Druckluft beaufschlagbar ist, ist vorzugsweise ein Verdichter. Als Druckluftquelle kann jedoch auch eine Druckluftflasche oder ein Druckleitungsnetz dienen, an das die Abwasserbehandlungsanlage anschließbar ist.

Die Belüftungsvorrichtung für den erforderlichen Lufteintrag in der Reaktionsphase wird vorzugsweise von derselben Druckluftquelle mit Luft versorgt. Hierdurch werden der konstruktive Aufwand der Abwasserbehandlungsanlage und damit deren Kosten weiter reduziert.

Um die fluidleitende Verbindung der Ablaufvorrichtung abzusperren und zu öffnen, ist mindestens eine in dem gekrümmten Abschnitt der fluidleitenden Verbindung mündende Arbeitsleitung vorgesehen, über die das Innere des gekrümmten Abschnitts zeitweilig mit Druckluft aus der Druckluftquelle beaufschlagbar oder entlüftbar ist.

Dieses zeitweilige Be- und Entlüften des gekrümmten Abschnitts kann konstruktiv einfach und mit geringen Kosten mit Hilfe eines 3/2-Wegeventils und einer Steuerung für eine zeitweilige Aktivierung/ Deaktivierung der Druckluftquelle erreicht werden. Hierzu ist die Druckluftquelle mit einem Druckluftanschluss und die Arbeitsleitung mit einem Arbeitsleitungsanschluss eines 3/2-Wegeventils verbunden, das zudem einen gedrosselten Entlüftungsanschluss aufweist. In einer ersten Schaltstellung des 3/2-Wegeventils ist der Weg für die Druckluft zwischen dem Druckluftanschluss und dem Arbeitsleitungsanschluss und der Weg zwischen dem Arbeitsleitungsanschluss und dem gedrosselten Entlüftungsanschluss geöffnet. Der gedrosselte Entlüftungsanschluss ist derart ausgelegt, dass er in der ersten Schaltstellung bei aktivierter Druckluftquelle das Innere des gekrümmten Abschnitts zeitweilig mit Druckluft beaufschlagt und dadurch absperrt. Wird indes die Druckluftquelle in der ersten Schaltstellung deaktiviert, wird der gekrümmte Abschnitt der fluidleitenden Verbindung entlüftet. In dieser ersten Schaltstellung kommt es bei aktivierter Druckluftquelle über den gedrosselten Entlüftungsanschluss zu geringen Druckluftverlusten, die jedoch in Anbetracht der kurzen Belüftungsphasen zum Absperren der Ablaufvorrichtung zu vernachlässigen sind.

Die Strömungswiderstände in dem Druckluftleitungssystem sind derart ausgelegt, dass in der ersten Schaltstellung bei aktivierter Druckluftquelle zunächst das Absperren der fluidleitenden Verbindung der Ablaufvorrichtung erfolgt und erst anschließend die Belüftungsvorrichtung belüftet wird. Hierdurch wird vermieden, dass bereits vor dem Absperren unbehandeltes Abwasser aufgewirbelt wird und über die Ablaufvorrichtung zum Auslass gelangt.

In der zweiten Schaltstellung ist indes der Weg für die Druckluft zwischen dem Druckluftanschluss und dem Arbeitsleitungsanschluss und der Weg zwischen dem Arbeitsleistungsanschluss und dem gedrosselten Entlüftungsanschluss gesperrt. In dieser Schaltstellung gelangt bei aktivierter Druckluftquelle die Druckluft über die Druckluftleitung ausschließlich zu der Belüftungsvorrichtung.

In einer Ausgestaltung der Erfindung weist die Steuerung für den zeitweiligen Betrieb der Druckluftquelle eine Messeinrichtung zur Erfassung des Füllstandes des Abwassers in dem Reaktorbehälter auf. Die Steuerung ist derart eingerichtet, dass die Zufuhr von Druckluft vorzeitig abgebrochen wird, wenn der von der Messeinrichtung erfasste Füllstand des Abwassers einen vorgegebenen Grenzwert, insbesondere den maximalen Abwasserstand (H _{W max}) überschreitet. Die Zufuhr von Druckluft kann dadurch vorzeitig abgebrochen werden, indem die Druckluftquelle mittels der Steuerung deaktiviert oder die Druckluftleitung unterbrochen wird. Eine mechanische Füllstandsmessung erfolgt beispielsweise mit einem Schwimmer auf dem Abwasserspiegel des Abwassers, der einen Schalter oder Wegaufnehmer bewegt. Alternativ kann die Höhe des Wasserstandes berührungslos erfasst werden, beispielsweise induktiv oder im Wege einer Druckdifferenzmessung. Ein vorzeitiger Abbruch der Zufuhr von Druckluft kann erforderlich werden, wenn in der Reaktionsphase der Abwasserbehandlung ungeplant so viel unbehandeltes Abwasser zuläuft, dass ein Austritt von unbehandeltem Abwasser mit Belebtschlammflocken zu befürchten ist. Durch das Unterbrechen der Zufuhr von Druckluft sinken die Belebtschlammflocken zu Boden und es kann nur noch Abwasser aus der sich bildenden Klarwasserzone über die Ablaufvorrichtung der Anlage verlassen.

Zur Vermeidung einer Durchmischung des gesamten Behälterinhalts wird das zufließende Abwasser vorzugsweise beruhigt in den Behälter eingeleitet, in dem an dem Einlass ein Zulauf für das unbehandelte Abwasser angeordnet ist und die Mündung unterhalb der Oberfläche des minimalen Abwasserstandes (H _{W min}) liegt.

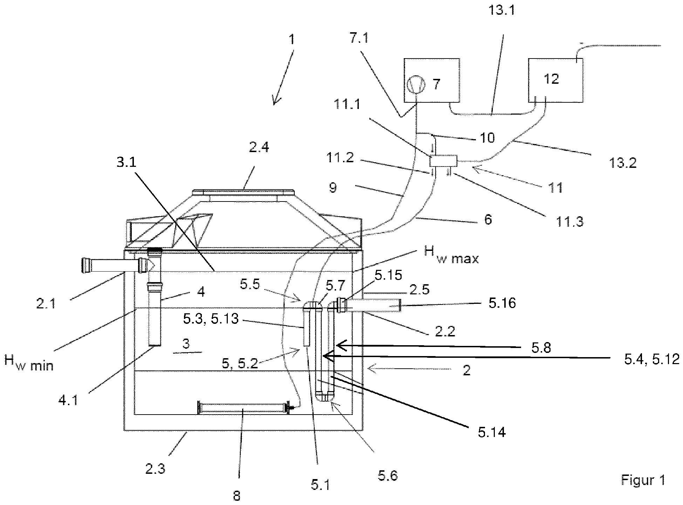

Nachfolgend wird die Erfindung anhand eines in der einzigen **Figur 1** dargestellten Ausführungsbeispiels einer Abwasserbehandlungsanlage näher erläutert.

Figur 1 zeigt eine erfindungsgemäße, sequentiell arbeitende Abwasserbehandlungsanlage (1) (SBR-Anlage) umfassend einen Reaktorbehälter (2) zur Aufnahme von Abwasser (3) mit einem Einlass (2.1) für das unbehandelte Abwasser und einen Auslass (2.2) für das behandelte Abwasser. Der Einlass (2.1) befindet sich oberhalb des maximalen Abwasserstandes H _{W max} in der Wand (2.5) des Reaktorbehälters (2). Der Auslass (2.2) für das behandelte Abwasser ist unterhalb des Einlasses für das unbehandelte Abwasser in der Wand (2.5) des Reaktorbehälters (2) angeordnet und befindet sich oberhalb des minimalen Abwasserstandes H _{W min} der Abwasserbehandlungsanlage (1). Der Ein- und Auslass (2.1, 2.2) sind bei dem gegebenen runden Querschnitt des Reaktorbehälters (2) diametral gegenüberliegend in der Wand (2.5) angeordnet.

An dem Einlass (2.1) ist ein Zulauf (4) für das unbehandelte Abwasser (3) angeordnet, dessen Mündung (4.1) rückflusssicher stets unterhalb des minimalen Abwasserstandes H _{W min} liegt.

Am Reaktorboden (2.3) des Reaktorbehälters (2) ist eine Belüftungsvorrichtung (8) befestigt. Bei der Belüftungsvorrichtung (8) handelt es sich beispielsweise um einen Membran-Belüfter. An der dem Reaktorboden (2.3) gegenüberliegenden Stirnseite ist auf den Reaktorbehälter (2) ein Deckel (2.4) aufgesetzt.

Eine doppelt u-förmige Ablaufvorrichtung (5) umfasst einen Ablaufeinlass (5.1) für das behandelte Abwasser sowie eine fluidleitende Verbindung zwischen dem Ablaufeinlass (5.1) und dem Auslass (2.2). Die fluidleitende Verbindung ist als Rohrleitung (5.2) ausgeführt.

Die Rohrleitung (5.2) weist einen nach oben, in Richtung der Oberfläche des maximalen Abwasserstands (H _{W max}) weisenden ersten gekrümmten Abschnitt (5.5) und einen nach unten, in Richtung des Reaktorbodens (2.3) weisenden zweiten gekrümmten Abschnitt (5.6) auf.

Der zweite gekrümmte Abschnitt (5.6) befindet sich unterhalb des ersten gekrümmten Abschnitts (5.5) und unterhalb der Oberfläche des minimalen Abwasserstand (H _{W min}). Ein Verbindungsabschnitt (5.4) der Rohrleitung (5.2) verbindet den ersten gekrümmten Abschnitt (5.5) und den zweiten gekrümmten Abschnitt (5.6) der Rohrleitung (5.2) miteinander. Der Verbindungsabschnitt (5.4) ist als langes, vertikal verlaufendes Rohrstück (5.12) ausgeführt.

Mit dem nach oben weisenden, ersten gekrümmten Abschnitt (5.5) ist außerdem ein Einlassabschnitt (5.3) der Rohrleitung (5.2) verbunden, der den Ablaufeinlass (5.1) aufweist. Der Einlassabschnitt (5.3) ist als kurzes, vertikal verlaufendes Rohrstück (5.13) ausgeführt.

Mit dem zweiten gekrümmten Abschnitt (5.6) ist außerdem ein Auslassabschnitt (5.8) der Rohrleitung (5.2) verbunden, der den zweiten gekrümmten Abschnitt (5.6) mit dem Auslass (2.2) verbindet. Der Auslassabschnitt (5.8) setzt sich in Ablaufrichtung aus einem in vertikaler Richtung verlaufenden langen Rohrstück (5.14), einem 90-Grad Verbinder (5.15) und einem horizontal verlaufenden Rohrstück (5.16) mit größerem Durchmesser zusammen. Das horizontal verlaufende Rohrstück (5.16) schließt bündig mit dem Auslass (2.2) ab.

Die beiden gekrümmten Abschnitte (5.5, 5.6) setzen sich jeweils aus zwei 90-Grad Rohrverbindern (5.7) und einem kurzen horizontal verlaufenden Rohrstück zusammen. In dem nach oben weisenden, ersten gekrümmten Abschnitt (5.5), nachfolgend auch kurz als Rohrkrümmer (5.5) bezeichnet, mündet eine Arbeitsleitung (6) ein, über die das Innere des Rohrkrümmers zeitweilig mit Druckluft aus einer Druckluftquelle (7) beaufschlagbar oder entlüftbar ist. Die Druckluftquelle (7) ist im dargestellten Ausführungsbeispiel als Verdichter ausgeführt.

Die Druckseite (7.1) der Druckluftquelle (7) ist über eine Druckluftleitung (9) mit der Belüftungsvorrichtung (8) verbunden. Des Weiteren ist die Druckseite (7.1) der Druckluftquelle (7) über eine Stichleitung (10) mit einem Druckluftanschluss (11.1) eines 3/2-Wegeventils (11) verbunden. Das 3/2-Wegeventil (11) umfasst neben dem Druckluftanschluss (11.1) einen Arbeitsleitungsanschluss (11.2) sowie einen gedrosselten Entlüftungsanschluss (11.3). An dem Arbeitsleitungsanschluss (11.2) des 3/2-Wegeventils (11) ist die Arbeitsleitung (6) angeschlossen. Der Entlüftungsanschluss (11.3), der über eine Drossel mit dem Arbeitsleitungsanschluss (11.2) in Verbindung steht, bläst in die Umgebung ab.

In einer ersten Schaltstellung des 3/2-Wegeventils (11) ist der Weg für die Druckluft zwischen dem Druckluftanschluss (11.1) und dem Arbeitsleitungsanschluss (11.2) und dem gedrosselten Entlüftungsanschluss (11.3) geöffnet. In einer zweiten Schaltstellung ist der Weg für die Druckluft zwischen dem Druckluftanschluss (11.1) und dem Arbeitsleitungsanschluss (11.2) sowie dem gedrosselten Entlüftungsanschluss (11.3) gesperrt. Der gedrosselte Entlüftungsanschluss (11.3) ist derart ausgelegt, dass in der ersten Schaltstellung bei aktiviertem Verdichter (7) das Innere des Rohrkrümmers (5.5) zeitweilig mit Druckluft beaufschlagt wird. Zugleich wird über die Drossel und den Entlüftungsanschluss (11.3) etwas Luft in die Umgebung abgeblasen. Dieser geringfügige Druckverlust ist jedoch unschädlich für den Aufbau der Luftblase in dem Rohrkrümmer (5.5). Die sich ausbildende Gasblase verhindert, dass das Wasser den Rohrkrümmer (5.5) passieren kann und damit über den Auslass (2.2) abgeleitet wird.

Wird der Verdichter (7) in der ersten Schaltstellung des 3/2-Wegeventils (11) mittels einer Steuerung (12) deaktiviert erfolgt keine weitere Beaufschlagung des Rohrkrümmers (5.5) mit Druckluft. Da der Weg zwischen dem Arbeitsleitungsanschluss (11.2) und dem Entlüftungsanschluss (11.3) in der ersten Schaltstellung geöffnet ist, entweicht die Druckluft aus dem Rohrkrümmer (5.5) über die Arbeitsleitung (6) durch den Entlüftungsanschluss (11.3) in die Umgebung und der Durchfluss durch die Ablaufvorrichtung (5) wird freigegeben.

Die vorstehende Beschreibung verdeutlicht, dass durch die Kombination des lediglich zwei Schaltstellungen aufweisenden 3/2-Wegeventils (11) und die Steuerung (12) zur Aktivierung und Inaktivierung des Verdichters (7) das Innere des Rohrkrümmers (5.5) zeitweilig mit Druckluft aus der Druckluftquelle (7) beaufschlagbar oder entlüftbar ist. Die Steuerung (12) ist zur Aktivierung und Inaktivierung des Verdichters (7) über eine Steuerleitung (13.1) mit dem Verdichter (7) und zur elektrischen Betätigung des 3/2-Wegeventils (11) über eine Steuerleitung (13.2) mit dem 3/2-Wegeventil (11) verbunden. Für die Belüftung der Belüftungsvorrichtung (8) wird ausschließlich die Steuerung (12) zur Aktivierung und Inaktivierung des Verdichters (7) benötigt.

Die Abwasserbehandlungsanlage (1) arbeitet wie folgt:
Das unbehandelte Abwasser (3) strömt diskontinuierlich über den Zulauf (4) in den Reaktorbehälter (2), wobei der Abwasserspiegel (3.1) von dem minimalen Abwasserstand H _{W min} allmählich in Richtung des maximalen Abwasserstandes H _{W max} steigt.

Das Abwasser (3) wird in der Abwasserbehandlungsanlage (1) mittels der Belüftungsvorrichtung (8) belüftet und der sogenannte Belebtschlamm wird durch den Lufteintrag umgewälzt. Das Abwasser wird in dieser Reaktionsphase biologisch gereinigt.

Nach der Reaktionsphase folgt die Absetzphase, in der mittels der Belüftungsvorrichtung (8) keine weitere Druckluft zugeführt wird. In der Absetzphase setzen sich der Belebtschlamm und die Feststoffe nach unten ab, sodass sich oberhalb des Belebtschlamms eine Klarwasserzone ausbildet.

Bis zur Ausbildung einer ausreichenden Klarwasserzone muss mittels der Steuerung (12) sichergestellt werden, dass kein Wasser aus dem Behälter (2) abläuft. Hierzu erhält das 3/2-Wegeventil (11) vor Beginn der Reaktionsphase über die Steuerleitung (13.2) einen Steuerbefehl, sodass das 3/2-Wegeventil (11) in die erste Schaltstellung bei zugleich über die Steuerleitung (13.1) aktiviertem Verdichter (7) schaltet. Die Druckluft strömt über die Stichleitung (10), das geöffnete 3/2-Wegeventil (11) sowie die Steuerleitung (6) in das Innere des Rohrkrümmers (5.5) der Ablaufvorrichtung (5) ein und sperrt den Durchfluss. Das 3/2-Wegeventil (11) wird über die zweite Steuerleitung (13.2) in die zweite Schaltstellung gebracht, sobald der Durchfluss aufgrund einer ausreichend großen Gasblase in dem Rohrkrümmer (5.5) gesperrt ist. Über die erste Steuerleitung (13.1) wird der Verdichter (7) solange aktiviert, bis die Reaktionsphase abgeschlossen ist.

Nach Beendigung der Reaktionsphase folgt die Absetzphase, in der der Verdichter (7) über die erste Steuerleitung (13.1) von der Steuerung (12) deaktiviert wird. Nach Beendigung der Absetzphase und Ausbildung einer hinreichend großen Klarwasserzone wird in der folgenden Dekantierphase das behandelte Abwasser aus der Klarwasserzone im freien Gefälle abgezogen. Um das Abziehen des Klarwassers einzuleiten, wird bei deaktiviertem Verdichter (7) das 3/2-Wegeventil (11) in die erste Schaltstellung gebracht, in der der Rohrkrümmer (5.5) über die Arbeitsleitung (6) und den geöffneten Entlüftungsanschluss (11.3) entlüftet und damit der Durchfluss durch die Ablaufvorrichtung (5) freigegeben wird.

Die Klarwasserzone erstreckt sich nach vollständiger Ausbildung vom Flüssigkeitsspiegel (3.1) bis deutlich unterhalb des minimalen Abwasserstandes H _{W min}. In jedem Fall ist der Ablaufeinlass (5.1) der Ablaufvorrichtung (5) derart angeordnet, dass dieser nach Beendigung der Absetzphase stets in der Klarwasserzone liegt, um ausschließlich Klarwasser in der Dekantierphase über den Ablauf abzuziehen.

Nach dem Abziehen des behandelten Abwassers (3) aus der Klarwasserzone in der Dekantierphase beginnt der Zyklus mit der Füllphase und Reaktionsphase von vorne, in dem die Steuerung (12) die Druckluftquelle (7) erneut aktiviert und das 3/2-Wegeventil (11) in die erste Schaltstellung bringt, so dass die Ablaufrichtung (5) abgesperrt wird.

Die Druckluftquelle (7) ist unter Berücksichtigung der Strömungswiderstände in dem Druckluftleitungssystem (6, 9, 10) sowie des auf die Belüftungsvorrichtung (8) wirkenden hydrostatischen Drucks derart ausgelegt, dass in der ersten Schaltstellung des 3/2-Wegeventils (11) zunächst die Beaufschlagung des Rohrkrümmers (5.5) der Ablaufvorrichtung mit Druckluft erfolgt und erst anschließend die Belüftungsvorrichtung (8) belüftet wird. Hierdurch wird sichergestellt, dass zunächst der Auslass (2.2) der Abwasserbehandlungsanlage gesperrt wird, bevor die Druckluft über die Belüftungsvorrichtung (8) austritt und den Belebtschlamm aufwirbelt und das Abwasser mit Sauerstoff versorgt.

| **Nr.** | **Bezeichnung** |
|---|---|
| 1. | Abwasserbehandlungsanlage |
| 2. | Reaktorbehälter |
| 2.1 | Einlass |
| 2.2 | Auslass |
| 2.3 | Reaktorboden |
| 2.4 | Deckel |
| 2.5 | Wand |
| 3. | Abwasser |
| 3.1 | Flüssigkeitsspiegel |
| 4. | Zulauf |
| 4.1 | Mündung |
| 5. | Ablaufvorrichtung |
| 5.1 | Ablaufeinlass |
| 5.2 | Rohrleitung |
| 5.3 | Einlassabschnitt |
| 5.4 | Verbindungsabschnitt |
| 5.5 | Nach oben weisender, erster gekrümmter Abschnitt |
| 5.6 | Nach unten weisender, zweiter gekrümmter Abschnitt |
| 5.7 | 90-Grad Rohrverbinder |
| 5.8 | Auslassabschnitt |
| 5.12 | Rohrstück lang vertikal |
| 5.13 | Rohrstück kurz vertikal |
| 5.14 | Rohrstück lang vertikal |
| 5.15 | 90-Grad Rohrverbinder |
| 5.16 | Rohrstück horizontal |
| | |
| 6. | Arbeitsleitung |
| 7. | Druckluftquelle |
| 7.1 | Druckseite |
| 8. | Belüftungsvorrichtung |
| 9. | Druckluftleitung |
| 10. | Stichleitung |
| 11. | 3/2-Wegeventil |
| 11.1 | Druckluftanschluss |
| 11.2 | Arbeitsleitungsanschluss |
| 11.3 | Entlüftungsanschluss |
| 12. | Steuerung |
| 13.1. | Erste Steuerleitung |
| 13.2 | Zweite Steuerleitung |

## Patentansprüche

1. Sequentiell arbeitende Abwasserbehandlungsanlage (1) zur biologischen Reinigung von Abwasser (3) umfassend
- einen Reaktorbehälter (2) mit einem Reaktorboden (2.3) zur Aufnahme von Abwasser (3), wobei die Oberfläche des Abwassers (3.1) zwischen einem maximalen Abwasserstand (H _{W max}) und einem minimalen Abwasserstand (H _{W min}) schwankt,
- einen Einlass (2.1) für das unbehandelte Abwasser (3), der oberhalb der Oberfläche des maximalen Abwasserstands (H _{W max}) in dem Reaktorbehälter (2) angeordnet ist,
- einen Auslass (2.2) für das behandelte Abwasser (3), der unterhalb des Einlasses (2.1) in dem Reaktorbehälter (2) und oberhalb der Oberfläche (3.1) des minimalen Abwasserstand (H _{W min}) angeordnet ist,
- eine in dem Reaktorbehälter (2) angeordnete Ablaufvorrichtung (5) mit einem Ablaufeinlass (5.1) für das behandelte Abwasser (3), wobei eine fluidleitende Verbindung zwischen dem Ablaufeinlass (5.1) der Ablaufvorrichtung (5) und dem Auslass (2.2) angeordnet ist,
- eine Belüftungsvorrichtung (8) zum Lufteintrag in das Abwasser (3), die am Grund des Reaktorbehälters (2) angeordnet ist, **dadurch gekennzeichnet, dass**
- die fluidleitende Verbindung eine Rohrleitung (5.2) ist, sich der Ablaufeinlass (5.1) unterhalb der Oberfläche des minimalen Abwasserstand (H _{W min}) befindet und die Abwasserbehandlungsanlage weiter folgendes umfasst:
- einen nach oben, in Richtung der Oberfläche des maximalen Abwasserstands (H _{W max}) weisenden ersten gekrümmten Abschnitt (5.5) in der Rohrleitung (5.2),
- einen nach unten, in Richtung des Reaktorbodens (2.3) weisenden zweiten gekrümmten Abschnitt (5.6) in der Rohrleitung (5.2), wobei sich der zweite gekrümmte Abschnitt (5.6) unterhalb des ersten gekrümmten Abschnitts (5.5) und unterhalb der Oberfläche des minimalen Abwasserstand (H _{W min}) befindet und wobei der vertikale Abstand zwischen dem zweiten gekrümmten Abschnitt (5.6) und der Oberfläche des minimalen Abwasserstands (H _{W min}) mindestens dem Abstand zwischen dem maximalen Abwasserstand (H _{W max}) und dem minimalen Abwasserstand (H _{W min}) beträgt,
- einen Verbindungsabschnitt (5.4) der Rohrleitung (5.2), der den ersten gekrümmten Abschnitt (5.5) und den zweiten gekrümmten Abschnitt (5.6) der Rohrleitung (5.2) miteinander verbindet,
- einen mit dem ersten gekrümmten Abschnitt (5.6) verbundenen Einlassabschnitt (5.3) der Rohrleitung (5.2), der den Ablaufeinlass (5.1) aufweist,
- einen mit dem zweiten gekrümmten Abschnitt (5.6) verbundenen Auslassabschnitt (5.8) der Rohrleitung (5.2), der den zweiten gekrümmten Abschnitt (5.6) mit dem Auslass (2.2) verbindet,
- mindestens eine in dem ersten gekrümmten Abschnitt (5.5) der fluidleitenden Verbindung (5.2) mündende Arbeitsleitung (6), über die das Innere des gekrümmten Abschnitts (5.5) zeitweilig mit Druckluft aus einer Druckluftquelle (7) beaufschlagbar oder zeitweilig entlüftbar ist.

2. Abwasserbehandlungsanlage nach Anspruch 1, **dadurch gekennzeichnet, dass** der Verbindungsabschnitt (5.4) der Rohrleitung (5.2) und /oder der Einlassabschnitt (5.3) der Rohrleitung (5.2) in vertikaler Richtung verlaufen.

3. Abwasserbehandlungsanlage nach Anspruch 1 oder 2, **dadurch gekennzeichnet, dass** der Auslassabschnitt (5.8) der Rohrleitung (5.2) ausgehend von dem zweiten gekrümmten Abschnitt (5.6) zunächst in vertikaler Richtung und sodann in horizontaler Richtung verläuft.

4. Abwasserbehandlungsanlage nach einem der Ansprüche 1 bis 3, **dadurch gekennzeichnet, dass** der erste und der zweite gekrümmte Abschnitt (5.5,5.6) ein Krümmer ist.

5. Abwasserbehandlungsanlage nach einen der Ansprüche 2 bis 4, **dadurch gekennzeichnet, dass** der Verbindungsabschnitt (5.4) der Rohrleitung (5.2) und /oder der Einlassabschnitt (5.3) der Rohrleitung (5.2) gerade Rohrstücke sind.

6. Abwasserbehandlungsanlage nach einen der Ansprüche 2 bis 5, **dadurch gekennzeichnet, dass** der in vertikaler Richtung und der in horizontaler Richtung verlaufende Auslassabschnitt (5.8) der Rohrleitung (5.2) jeweils gerade Rohrstücke sind, die über einen 90-Grad Verbinder miteinander verbunden sind.

7. Abwasserbehandlungsanlage nach einem der Ansprüche 1 bis 6, **dadurch gekennzeichnet, dass** die Druckluftquelle (7) ein Verdichter ist.

8. Abwasserbehandlungsanlage nach einem der Ansprüche 1 bis 7, **dadurch gekennzeichnet, dass** die Belüftungsvorrichtung (8) mit der Druckluftquelle (7) über eine Druckluftleitung (9) verbunden ist.

9. Abwasserbehandlungsanlage nach einem der Ansprüche 1 bis 8 weiter umfassend
- ein 3/2-Wegeventil (11) mit einem Druckluftanschluss (11.1), einem Arbeitsleitungsanschluss (11.2) sowie einem gedrosselten Entlüftungsanschluss (11.3),
- die Druckluftquelle (7) mit dem Druckluftanschluss (11.1) und die Arbeitsleitung (6) mit dem Arbeitsleitungsanschluss (11.2) des 3/2-Wegeventils (11) verbunden ist,
- in einer ersten Schaltstellung des 3/2-Wegeventils (11) der Weg für die Druckluft zwischen dem Druckluftanschluss (11.1) und dem Arbeitsleitungsanschluss (11.2) und der Weg zwischen dem Arbeitsleitungsanschluss (11.2) und dem gedrosselten Entlüftungsanschluss (11.3) geöffnet sind und in einer zweiten Schaltstellung der Weg für die Druckluft zwischen dem Druckluftanschluss (11.1) und dem Arbeitsleitungsanschluss (11.2) und der Weg zwischen dem Arbeitsleitungsanschluss (11.2) und dem gedrosselten Entlüftungsanschluss (11.3) gesperrt sind, wobei der gedrosselte Entlüftungsanschluss (11.3) derart ausgelegt ist, dass in der ersten Schaltstellung bei aktivierter Druckluftquelle (7) das Innere des gekrümmten Abschnitts (5.5) zeitweilig mit Druckluft beaufschlagt und in der ersten Schaltstellung bei nicht aktivierter Druckluftquelle (7) das Innere des gekrümmten Abschnitts (5.5) entlüftet wird.

10. Abwasserbehandlungsanlage nach einem der Ansprüche 1 bis 9, weiter umfassend eine Steuerung (12), eingerichtet für eine zeitweilige Aktivierung der Druckluftquelle (7).

11. Abwasserbehandlungsanlage nach Anspruch 9 und 10, **dadurch gekennzeichnet, dass** die Steuerung (12) unabhängig von der Aktivierung der Druckluftquelle (7) zur Ansteuerung des elektrisch betätigten 3/2-Wegeventils (11) eingerichtet ist.

12. Abwasserbehandlungsanlage nach einem der Ansprüche 1 bis 11 weiter umfassend eine Messeinrichtung zur Erfassung des Füllstandes des Abwassers (3) in dem Reaktorbehälter (2) .

13. Abwasserbehandlungsanlage nach Anspruch 12, **dadurch gekennzeichnet, dass** die Steuerung (12) weiter derart eingerichtet ist, dass die Zufuhr von Druckluft zumindest zu der Belüftungsvorrichtung (11) vorzeitig abgebrochen wird, wenn der von der Messeinrichtung (14) erfasste Füllstand des Abwassers (3) den maximalen Abwasserstand (H _{W max}) überschreitet.

14. Abwasserbehandlungsanlage nach einem der Ansprüche 1 bis 13, **dadurch gekennzeichnet, dass** an dem Einlass (2.1) ein Zulauf (4) für das unbehandelte Abwasser (3) angeordnet ist und die Mündung (4.1) unterhalb der Oberfläche des minimalen Abwasserstand (H _{W min}) liegt.

## Claims

1. Sequentially operating waste water treatment plant (1) for the biological purification of waste water (3) comprising
- a reactor vessel (2) with a reactor bottom (2.3) for receiving waste water (3), wherein the surface of the waste water (3.1) fluctuates between a maximum waste water level (H _{W max}) and a minimum waste water level (H _{W min}),
- an inlet (2.1) for the untreated waste water (3) arranged above the surface of the maximum waste water level (H _{W max}) in the reactor vessel (2),
- an outlet (2.2) for the treated waste water (3) located below the inlet (2.1) in the reactor vessel (2) and above the surface (3.1) of the minimum waste water level (H _{W min}),
- a drainage device (5) arranged in the reactor vessel (2) with a drainage inlet (5.1) for the treated waste water (3), wherein a fluid-conducting connection is arranged between the drain inlet (5.1) of the drain device (5) and the outlet (2.2),
- an aeration device (8) for introducing air into the waste water (3) which is arranged on the base of the rector vessel (2), **characterized in that**
- the fluid-conducting connection is a pipeline (5.2), the drainage inlet (5.1) is located below the surface of the minimum waste water level (H _{W min}), and the waste water treatment plant further comprises the following:
- a first curved section (5.5) in the pipeline (5.2) pointing upwards towards the surface of the maximum waste water level (H _{W max}),
- a second curved section (5.6) in the pipeline (5.2) pointing downwards towards the reactor bottom (2.3), wherein the second curved section (5.6) is located below the first curved section (5.5) and below the surface of the minimum waste water level (H _{W min}), and wherein the vertical distance between the second curved section (5.6) and the surface of the minimum waste water level (H _{W min}) is at least the distance between the maximum waste water level (H _{W max}) and the minimum waste water level (H _{W min}),
- a connecting section (5.4) of the pipeline (5.2) which connects the first curved section (5.5) and the second curved section (5.6) of the pipeline (5.2),
- an inlet section (5.3) of the pipeline (5.2) connected to the first curved section (5.6) which has the drain inlet (5.1),
- an outlet section (5.8) of the pipeline (5.2) connected to the second curved section (5.6) which connects the second curved section (5.6) to the outlet (2.2),
- at least one working line (6) opening in the first curved section (5.5) of the fluid-conducting connection (5.2), via which the interior of the curved section (5.5) can be temporarily pressurised with compressed air from a compressed air source (7) or can be temporarily vented.

2. Waste water treatment plant according to Claim 1, **characterized in that** the connecting section (5.4) of the pipeline (5.2) and/or the inlet section (5.3) of the pipeline (5.2) run in a vertical direction.

3. Waste water treatment plant according to Claim 1 or 2, **characterized in that** the outlet section (5.8) of the pipeline (5.2) runs from the second curved section (5.6) initially in a vertical direction and then in a horizontal direction.

4. Waste water treatment plant according to one of Claims 1 to 3, **characterized in that** the first and the second curved section (5.5, 5.6) is a bend.

5. Waste water treatment plant according to one of Claims 2 to 4, **characterized in that** the connecting section (5.4) of the pipeline (5.2) and/or the inlet section (5.3) of the pipeline (5.2) are straight pipe pieces.

6. Waste water treatment plant according to one of Claims 2 to 5, **characterized in that** the outlet section (5.8) of the pipeline (5.2) running in the vertical direction and running in the horizontal direction are each straight pipe pieces which are connected to one another via a 90-degree connector.

7. Waste water treatment plant according to one of Claims 1 to 6, **characterized in that** the compressed air source (7) is a compressor.

8. Waste water treatment plant according to one of Claims 1 to 7, **characterized in that** the aeration device (8) is connected to the compressed air source (7) via a compressed air line (9).

9. Waste water treatment plant according to one of Claims 1 to 8 further comprising
- a 3/2-way valve (11) with a compressed air connection (11.1), a working line connection (11.2) and a throttled vent connection (11.3),
- the compressed air source (7) is connected to the compressed air connection (11.1) and the working line (6) is connected to the working line connection (11.2) of the 3/2-way valve (11),
- in a first switching position of the 3/2-way valve (11), the path for the compressed air between the compressed air connection (11.1) and the working line connection (11.2) and the path between the working line connection (11.2) and the throttled vent connection (11.3) are open and in a second switching position, the path for the compressed air between the compressed air connection (11.1) and the working line connection (11.2) and the path between the working line connection (11.2) and the throttled vent connection (11.3) are blocked, wherein the throttled vent connection (11.3) is designed in such a manner that in the first switching position, when the compressed air source (7) is activated, the interior of the curved section (5.5) is temporarily pressurized with compressed air and in the first switching position, when the compressed air source (7) is not activated, the interior of the curved section (5.5) is vented.

10. Waste water treatment plant according to one of Claims 1 to 9, further comprising a control (12) adapted for a temporary activation of the compressed air source (7) .

11. Waste water treatment plant according to Claim 9 and 10, **characterized in that** the control (12) is adapted to control the electrically operated 3/2-way valve (11) independently of the activation of the compressed air source (7).

12. Waste water treatment plant according to one of Claims 1 to 11, further comprising a measuring device for detecting the fill level of the waste water (3) in the reactor vessel (2).

13. Waste water treatment plant according to Claim 12, **characterized in that** the control (12) is further configured in such a manner that the supply of compressed air at least to the aeration device (11) is prematurely interrupted if the filling level of the waste water (3) detected by the measuring device (14) exceeds the maximum waste water level (H _{W max}).

14. Waste water treatment plant according to one of Claims 1 to 13, **characterized in that** an intake (4) for the untreated waste water (3) is arranged at the inlet (2.1) and the mouth (4.1) lies below the surface of the minimum waste water level (H _{W min}).

## Revendications

1. Station d'épuration (1) des eaux usées à fonctionnement séquentiel, destinée à l'assainissement biologique d'eaux usées (3), comprenant
- une cuve de réacteur (2), pourvue d'un fond de réacteur (2.3), destinée à recevoir des eaux usées (3), la surface des eaux usées (3.1) fluctuant entre un niveau maximum (H _{W max}) des eaux usées et un niveau minimum (H _{W min}) des eaux usées,
- une entrée (2.1) pour les eaux usées (3) non traitées, qui est placée au-dessus de la surface du niveau maximum (H _{W max}) des eaux usées dans la cuve de réacteur (2),
- une sortie (2.2) pour les eaux usées (3) traitées, qui est placée en-dessous de l'entrée (2.1) dans la cuve de réacteur (2) et au-dessus de la surface (3.1) du niveau minimum (H _{W min}) des eaux usées,
- un dispositif d'évacuation (5), placé dans la cuve de réacteur (2), pourvu d'une entrée de l'évacuation (5.1) pour les eaux usées (3) traitées, une liaison fluidique étant placée entre l'entrée de l'évacuation (5.1) du dispositif d'évacuation (5) et la sortie (2.2),
- un dispositif d'aération (8) pour l'introduction d'air dans les eaux usées (3), qui est placé sur le fond inférieur de la cuve de réacteur (2), **caractérisée en ce que**
- la liaison fluidique est une canalisation (5.2), l'entrée d'évacuation (5.1) se situe en-dessous de la surface du niveau minimum (H _{W min}) des eaux usées et la station d'épuration des eaux usées comprend par ailleurs ce qui suit :
- un tronçon (5.5) incurvé dans la canalisation (5.2), tourné vers le haut, en direction de la surface maximum (H _{W max}) des eaux usées
- un deuxième tronçon (5.6) incurvé dans la canalisation (5.2), tourné vers le bas, en direction du fond de réacteur (2.3), le deuxième tronçon (5.6) incurvé se trouvant en-dessous du premier tronçon (5.5) incurvé et en-dessous de la surface du niveau minimum (H _{W min}) des eaux usées et l'écart vertical entre le deuxième tronçon (5.6) incurvé et la surface du niveau minimum (H _{W min}) des eaux usées s'élevant au moins à l'écart compris entre le niveau maximum (H _{W max}) des eaux usées et le niveau minimum (H _{W min}) des eaux usées,
- un tronçon de liaison (5.4) de la canalisation (5.2), qui relie l'un à l'autre le premier tronçon (5.5) incurvé et le deuxième tronçon (5.6) incurvé de la canalisation (5.2),
- un tronçon d'entrée (5.3) de la canalisation (5.2), relié avec le premier tronçon (5.6) incurvé, qui comporte l'entrée d'évacuation (5.1),
- un tronçon de sortie (5.8) de la canalisation (5.2), relié avec le deuxième tronçon (5.6) incurvé, qui relie le deuxième tronçon (5.6) incurvé avec la sortie (2.2),
- au moins une conduite de travail (6), débouchant dans le premier tronçon (5.5) incurvé de la liaison fluidique (5.2), par l'intermédiaire de laquelle l'intérieur du tronçon (5.5) incurvé peut être soumis temporairement à de l'air comprimé émanant d'une source (7) d'air comprimé ou peut être temporairement purgé d'air.

2. Station d'épuration des eaux usées selon la revendication 1, **caractérisée en ce que** le tronçon de liaison (5.4) de la canalisation (5.2) et / ou le tronçon d'entrée (5.3) de la canalisation (5.2) s'écoulent en direction verticale.

3. Station d'épuration des eaux usées selon la revendication 1 ou 2, **caractérisée en ce qu'**en partant du deuxième tronçon (5.6) incurvé, le tronçon de sortie (5.8) de la canalisation (5.2) s'écoule d'abord en direction verticale et ensuite en direction horizontale.

4. Station d'épuration des eaux usées selon l'une quelconque des revendications 1 à 3, **caractérisée en ce que** le premier et le deuxième tronçon (5.5, 5.6) incurvé est un collecteur.

5. Station d'épuration des eaux usées selon l'une quelconque des revendications 2 à 4, **caractérisée en ce que** le tronçon de liaison (5.4) de la canalisation (5.2) et / ou le tronçon d'entrée (5.3) de la canalisation (5.2) sont des pièces tubulaires droites.

6. Station d'épuration des eaux usées selon l'une quelconque des revendications 2 à 5, **caractérisée en ce que** le tronçon de sortie (5.8) de la canalisation (5.2) s'écoulant en direction verticale et celui s'écoulant en direction horizontale sont chacun des pièces tubulaires droites, qui sont reliées l'une à l'autre par l'intermédiaire d'un connecteur à 90 degrés.

7. Station d'épuration des eaux usées selon l'une quelconque des revendications 1 à 6, **caractérisée en ce que** la source (7) d'air comprimé est un compresseur.

8. Station d'épuration des eaux usées selon l'une quelconque des revendications 1 à 7, **caractérisée en ce que** le dispositif d'aération (8) est relié avec la source (7) d'air comprimé par l'intermédiaire d'une conduite (9) d'air comprimé.

9. Station d'épuration des eaux usées selon l'une quelconque des revendications 1 à 8, comprenant par ailleurs
- une soupape à 3/2 voies (11), pourvue d'un raccordement (11.1) d'air comprimé, d'un raccordement (11.2) sur la conduite de travail ainsi que d'un raccordement (11.3) de purge d'air étranglé,
- la source (7) d'air comprimé est reliée avec le raccordement (11.1) d'air comprimé et la conduite de travail (6) est reliée avec le raccordement (11.2) sur la conduite de travail de la soupape à 3/2 voies (11),
- dans une première position de commutation de la soupape à 3/2 voies (11), la voie pour l'air comprimé entre le raccordement (11.1) d'air comprimé et le raccordement (11.2) sur la conduite de travail et la voie entre le raccordement (11.2) sur la conduite de travail et le raccordement (11.3) de purge d'air étranglé sont ouvertes et dans une deuxième position de commutation, la voie pour l'air comprimé entre le raccordement (11.1) d'air comprimé et le raccordement (11.2) sur la conduite de travail et la voie entre le raccordement (11.2) sur la conduite de travail et le raccordement (11.3) de purge d'air étranglé sont fermées, le raccordement (11.3) de purge d'air étranglé étant conçu de telle sorte que dans la première position de commutation, lorsque la source (7) d'air comprimé est activée, l'intérieur du tronçon (5.5) incurvé soit temporairement soumis à de l'air comprimé et dans la première position de commutation, lorsque la source (7) d'air comprimé n'est pas activée, l'intérieur du tronçons (5.5) incurvé soit purgé d'air.

10. Station d'épuration des eaux usées selon l'une quelconque des revendications 1 à 9, comprenant par ailleurs un système de commande (12), configuré pour une activation temporaire de la source (7) d'air comprimé.

11. Station d'épuration des eaux usées selon la revendication 9 et 10, **caractérisée en ce que** la système de commande (12) est configuré indépendamment de l'activation de la source (7) d'air comprimé pour commander la soupape à 3/2 voies (11) actionnée électriquement.

12. Station d'épuration des eaux usées selon l'une quelconque des revendications 1 à 11, comprenant par ailleurs un dispositif de mesure, destiné à détecter le niveau de remplissage des eaux usées (3) dans la cuve de réacteur (2) .

13. Station d'épuration des eaux usées selon la revendication 12, **caractérisée en ce que** par ailleurs, le système de commande (12) est configuré de telle sorte que l'alimentation d'air comprimé au moins vers le dispositif d'aération (11) soit interrompue prématurément, lorsque le niveau de remplissage des eaux usées (3) détecté par le dispositif de mesure (14) dépasse le niveau maximum (H _{W max}) des eaux usées.

14. Station d'épuration des eaux usées selon l'une quelconque des revendications 1 à 13, **caractérisée en ce qu'**à l'entrée (2.1) est placée une arrivée (4) pour les eaux usées (3) non traitées et **en ce que** l'embouchure (4.1) se situe en-dessous de la surface du niveau minimum (H _{W min}) des eaux usées.
